# EUROPÄISCHE PATENTSCHRIFT

(11) **EP 4 460 675 B1**
(45) Veröffentlichungstag und Bekanntmachung des Hinweises auf die Patenterteilung: **04.06.2025**
(21) Anmeldenummer: 24702711.3
(22) Anmeldetag: 26.01.2024
(51) Int. Cl.: G01C 21/00

(54) **VERFAHREN ZUR AUFZEICHNUNG VON ERFASSTEN UMGEBUNGSDATEN**
METHOD FOR RECORDING DETECTED SURROUNDINGS DATA
PROCÉDÉ D'ENREGISTREMENT DE DONNÉES D'ENVIRONNEMENT DÉTECTÉES

(30) Priorität: 13.02.2023 DE 102023000469
(43) Veröffentlichungstag der Anmeldung: 13.11.2024
(73) Patentinhaber: Mercedes-Benz Group AG, 70372 Stuttgart (DE)
(72) Erfinder: SCHNEIDER, Christian, 78315 Radolfzell am Bodensee (DE)
(74) Vertreter: Novagraaf Group
(86) Internationale Anmeldenummer: PCT/EP2024/051968
(87) Internationale Veröffentlichungsnummer: WO 2024/170257

(56) Entgegenhaltungen:
- EP-A1- 3 875 910
- EP-A1- 4 318 434
- WO-A1-2022/201343
- DE-T5- 112020 002 312
- JP-A- 2019 178 888

## Beschreibung

Die Erfindung betrifft ein Verfahren zur Aufzeichnung von erfassten Umgebungsdaten nach der im Oberbegriff von Anspruch 1 näher definierten Art.

In aktuellen Fahrerassistenzsystemen finden eine Vielzahl von Algorithmen Anwendung, welche beispielsweise die Umgebung dreidimensional rekonstruieren. Ferner können sie die Eigenbewegung des Fahrzeugs extrahieren oder die Bewegungstrajektorie von Verkehrsteilnehmern vorhersagen. In den aktuellen Generationen sind dabei die Algorithmen typischerweise regelbasiert. Dies führt zu der Notwendigkeit einer initialen Parametrisierung. Um dem entgegenzuwirken und eine optimierte Anpassung des Algorithmik an reale Szenarien zu ermöglichen ist heute bereits ein Trend hinsichtlich einer datengetriebenen Algorithmik zu sehen. Als Beispiele hierfür können ResNet, Yolo oder AutoNet genannt werden. Derartige Deep Learning Ansätze haben jedoch einen erheblichen Trainingsaufwand, welcher sich wiederum auf eine große Datenbasis stützen muss, welche mehrere tausend Trainingsstunden umfassen kann. Jeder dieser Trainingsdatensätze wird in der aktuellen Generation über eine große Flotte von Fahrzeugen weltweit akquiriert. Diese Akquisition beschränkt sich jedoch auf den öffentlichen Straßenverkehr und auf konstruierte Szenarien innerhalb von herstelleigenen Testgeländen. Daneben gibt es grundsätzlich auch die Möglichkeit Trainingsdaten virtuell zu erzeugen, wobei auch diese typischerweise auf entsprechenden Erfahrungen basieren und deshalb häufig Szenarien enthalten, welche so vor allem im öffentlichen Umfeld zu finden sind.

In der Praxis ist es nun jedoch so, dass Fahrzeuge nicht ausschließlich im öffentlichen Straßenverkehr bewegt werden, sondern auch in einem privaten, nicht-öffentlichen Umfeld. Beispielsweise können hier Parkfunktionen, die Einfahrt in Garagen und dergleichen genannt werden. In solchen privaten Szenarien treten Objekte auf, welche im öffentlichen Straßenverkehr nur sehr vereinzelt zu beobachten sind. Beispiele könnten ein Kind auf einem Bobbycar sein oder eine Regenrinne neben einer Garageneinfahrt. Wenn solche Objekte nicht Teil des initial im Feld akquirierten Datensatzes sind, kann für derartige Szenarien kein ausreichendes Training erfolgen, was letztlich zu einer eingeschränkten Funktionalität und/oder einem Sicherheitsrisiko führen könnte.

Ein aktueller Ansatz sieht es dabei vor, Daten prinzipiell überall über die Fahrzeugflotte zu sammeln. Diese Daten werden dann, meist nach einer Zwischenspeicherung in dem erfassenden Fahrzeug, von Zeit zu Zeit auf einen fahrzeugexternen Server, beispielsweise einen Cloudspeichersystem, überspielt und dort weiterverarbeitet. Mit großem Aufwand müssen hier Daten, welche zuvor aufwändig und kostspielig erfasst und übertragen worden sind, wieder aussortiert werden, weil sie aus rechtlichen Gründen nicht genutzt werden dürfen, da sie beispielsweise in einem nicht-öffentlichen, also privaten Umfeld erfasst worden sind, und besonderem Datenschutz unterliegen.

Dies bindet große Ressourcen, ist aufwändig und teuer.

Eine Möglichkeit, solche Daten nun doch noch teilweise zu verwenden, besteht im Wesentlichen darin, sensible private Informationen entsprechend unkenntlich zu machen, indem beispielsweise die Gesichter von Personen verpixelt werden. In diesem Zusammenhang kann auf die US 2013/0108105 A1, oder ähnlich gelagert auch auf die KR 10 2019 0 120 663 A verwiesen werden. Problematisch ist er hierbei, dass die Daten zuvor gesammelt, dann ressourcenintensiv in den relevanten Bereichen verpixelt und auf die Server übertragen werden müssen. Sie verschärfen damit die oben beschriebenen Nachteile und machen ein derartiges Verfahren noch daten- und ressourcenintensiver.

Zum weiteren allgemeinen Stand der Technik kann außerdem auf das sogenannte Histogramm von orientierten Gradienten (HOG) verwiesen werden, über welches sehr effizient beispielsweise Kanten und ähnliche für Objekte relevante Informationen generiert werden können. Rein beispielhaft sei hierzu die US 2020 / 0 012 867 A1 genannt, welche solche HOG zur Unterscheidung befahrbarer und nicht befahrbarer Abschnitte des Bewegungsraums eines Fahrzeugs thematisiert.

DE 11 2020 002312 T5 offenbart ein weiteres Verfahren zum Speichern von Routeninformationen.

Die Aufgabe der hier vorliegenden Erfindung besteht nun darin ein effizientes Verfahren im oben beschriebenen Sinn zu schaffen, welches die Menge der zu übermittelnden Daten reduzieren kann.

Erfindungsgemäß wird diese Aufgabe durch ein Verfahren mit den Merkmalen im Anspruch 1 gelöst. Vorteilhafte Ausgestaltungen und Weiterbildungen des Verfahrens ergeben sich aus den hiervon abhängigen Unteransprüchen.

Bei dem erfindungsgemäßen Verfahren ist es so, dass die Aufzeichnung von Umgebungsdaten, welche dann später an einen fahrzeugexternen Server überspielt werden müssen, immer nur dann erfolgt, wenn diese auch tatsächlich für das Erstellen von Trainingsdaten Verwendung finden dürfen. Das erfindungsgemäße Verfahren nutzt dazu eine Kategorisierung der von dem Fahrzeug befahrenen Straßen als öffentliche oder nicht-öffentliche Straßen. Im Falle einer öffentlichen Straße kann eine Aufzeichnung der Daten erfolgen. Diese werden aufgezeichnet und später entsprechend übermittelt. Für den Fall, dass eine nicht-öffentliche Straße oder eine Straße mit unklarer Kategorisierung befahren wird, kann gemäß einer bevorzugten Weiterbildung des erfindungsgemäßen Verfahrens fahrzeugseitig nach weiteren Informationen, beispielsweise bei einem Backendserver, angefragt werden, um die Kategorisierung zu präzisieren. Ist dies nicht möglich, wird die Straße gemäß dieser Weiterbildung als nicht-öffentlich kategorisiert.

In diesem Fall spielt nun das erfindungsgemäße Verfahren seine besondere Stärke aus. Anhand der Datenbasis, welche insbesondere SD- oder HD-Kartenmaterial umfassen kann, wird ein charakteristisches Abbild der öffentlichen Straße erstellt. Dieses charakteristische Abbild, für dessen Erstellung es verschiedene denkbare Möglichkeiten gibt, wird dann über eine intrinsische und extrinsische Kalibrierung der Umgebungssensoren positionsgenau in die erfassten Umgebungsdaten, z.B. eine Kamerabild, eingeblendet. Es findet also eine Überlagerung des virtuellen charakteristischen Abbilds aus dem Datenmaterial einerseits und des von den Umgebungssensoren erfassten Abbilds der Realität andererseits statt. Eine Aufzeichnung der erfassten Umgebungsdaten erfolgt nun ausschließlich dann, wenn - wie oben bereits dargelegt - das Fahrzeug auf einer eindeutig als öffentlich kategorisierten Straße fährt oder wenn in den erfassten Umgebungsdaten wenigstens eines Umgebungssensors wenigstens ein Teil der eingeblendeten charakteristischen Abbildung der öffentlichen Straße erkennbar ist.

Rechnerbasiert kann also ein Vergleich des virtuellen charakteristischen Abbilds der öffentlichen Straße von der Position des Fahrzeugs, welche über GPS erfasst werden kann, und des von einem Umgebungssensor des Fahrzeugs erzeugten Abbilds der Umgebung erfolgen. Solange in diesem Abbild noch ein Teil des charakteristischen Abbilds der öffentlichen Straße zu sehen ist, hat das Fahrzeug also eine Sichtverbindung zu der öffentlichen Straße, sodass davon ausgegangen werden kann, dass auch in umgekehrter Richtung das Fahrzeug von der öffentlichen Straße aus noch zu erkennen ist. Damit ist auch die unmittelbare Umgebung des Fahrzeugs von der öffentlichen Straße einsehbar, auch wenn das Fahrzeug sich in einem als privat bzw. nicht-öffentlich oder unklar kategorisierten Straßenabschnitt bewegt. Die Umgebungsdaten können also weiter aufgezeichnet und später genutzt werden. Kommt es nun beispielsweise durch statische Objekte wie Zäune, Hecken, Mauern oder dergleichen dazu, dass keine Sichtverbindung mehr zu der öffentlichen Straße besteht, dann wird in allen Umgebungsdaten aller Umgebungssensoren des Fahrzeugs kein Teil des charakteristischen Abbilds der öffentlichen Straße mehr erkannt. In diesem Fall befindet sich das Fahrzeug also außerhalb des Sichtkontakts zur öffentlichen Straße und damit eindeutig in einem als privat oder nicht-öffentlich zu betrachtenden Bereich. Die Aufzeichnung wird dann gestoppt, sodass in diesem Bereich keine Daten erfasst werden, sodass derartige Daten auch nicht übermittelt werden müssen.

Damit erfolgt die Überprüfung auf die potenzielle Nutzbarkeit von Daten bereits im Fahrzeug selbst, sodass nur diejenigen Daten erfasst und aufgezeichnet werden, welche später auch genutzt werden können. Hierdurch wird die Menge, der an einen Backenserver zu übermittelnden Daten, reduziert. Damit entsteht ein erheblicher technischer Vorteil bezüglich der zu transferierenden Datenmengen und der benötigten Datenraten für die Übermittlung.

Wie bereits erwähnt kann die Erkennbarkeit der charakteristischen Abbildung der öffentlichen Straße in den erfassten Umgebungsdaten über einen rechnerischen Vergleich schnell und zuverlässig erfolgen. Die Datenbank selbst kann als Karte ausgebildet sein und wird im Normalfall die Kategorisierung nach öffentlichen und nicht-öffentlichen Straßen bereits direkt oder implizit enthalten, da hier beispielsweise Bundesstraßen, Autobahnen oder dergleichen als solche kategorisiert sind, und diese Kategorisierung eindeutig einer öffentlichen Kategorie der Straße zugeordnet werden kann. Im Falle einer unklaren Kategorisierung können weitere Informationen von einem fahrzeugexternen Server, wie beispielsweise dem Backendserver des Fahrzeugherstellers, abgerufen werden, um die Kategorisierung im Fahrzeug vorzunehmen. Führt dies nicht zu einer klaren öffentlichen Kategorisierung soll gemäß dieser bevorzugten Weiterbildung immer eine Kategorisierung als nicht-öffentlich erfolgen, um somit keine später nicht verwendbaren Daten zu generieren und die Menge der erfassten und aufgezeichneten Daten, welche später übertragen werden müssen, im Sinne der Erfindung klein zu halten.

Es gibt nun verschiedene bei Bedarf auch untereinander kombinierbare oder austauschbare Möglichkeiten, die charakteristische Abbildung der öffentlichen Straße zu generieren.

Gemäß einer ersten sehr vorteilhaften Ausführung des erfindungsgemäßen Verfahrens wird die charakteristische Abbildung der öffentlichen Straße durch eine Reihe von Ankerpunkten gebildet, welche entlang des Verlaufs der öffentlichen Straße anhand der Datenbasis, insbesondere des Kartenmaterials, gebildet werden. Werden diese Ankerpunkte als charakteristische Abbildung der öffentlichen Straße positionsgenau in die erfassten Daten bzw. Bilder, im Falle einer Kamera als Umgebungssensor, eingeblendet, dann kann geprüft werden, ob zumindest einer dieser Ankerpunkte in den Umgebungsdaten erkennbar ist. Ist er dies, kann die Aufzeichnung von Daten erfolgen, ist er dies nicht, dann wird sie gestoppt.

Gemäß einer sehr vorteilhaften Weiterbildung hiervon kann es dabei vorgesehen sein, dass um jeden der Ankerpunkte ein Fenster gebildet wird, für dessen Bereich die Erkennbarkeit entsprechend geprüft wird.

Die Verwendung von Ankerpunkten hat dabei den entscheidenden Vorteil, dass, und so ist es gemäß einer sehr günstigen Weiterbildung des erfindungsgemäßen Verfahrens auch vorgesehen, diejenigen Ankerpunkte, welche aus der erfassten Position des Fahrzeugs heraus bereits in dem Kartenmaterial erkennbar durch Objekte verdeckt sind, unberücksichtigt bleiben. Damit wird der Datenverarbeitungsaufwand bereits bei der Überprüfung reduziert. Dennoch besteht die Möglichkeit einer sehr differenzierten Überprüfung, weil ja vorteilhaftweiser für jeden Ankerpunkt ein um diesen Ankerpunkt liegendes Fenster entsprechend genutzt wird.

Ergänzend oder alternativ hierzu kann eine charakteristische Abbildung der öffentlichen Straße auch durch einen sogenannten Polygonzug bzw. Spline entlang der Straße gebildet werden. Er bietet im Gegensatz zu den einzelnen Ankerpunkten den Vorteil, dass er als Ganzes hinsichtlich der Erkennbarkeit geprüft werden kann, es kann jedoch durch einzelne kleine Verdeckungen sehr schnell zu einer fehlenden Übereinstimmung zwischen dem Spline und der Ansicht in den erfassten Umgebungsdaten kommen, sodass gemäß einer sehr vorteilhaften Weiterbildung hiervon der Polygonzug, im Falle einer teilweisen in der Datenbasis erkennbaren Verdeckung seines Verlaufs durch Objekte aus der Position des Fahrzeugs heraus, in mehrere Teilpolygonzüge aufgeteilt wird, sodass die verdeckten Objekte ausgespart sind. Die Erkennbarkeit in den erfassten Umgebungsdaten lässt sich dann gemäß einer sehr günstigen Ausgestaltung für den gesamten Polygonzug oder für den Fall, dass dieser in Teilpolygonzüge aufgeteilt ist, für jeden der Teilpolygonzüge entsprechend durchführen.

Eine weitere Möglichkeit die charakteristische Abbildung der öffentlichen Straße zu generieren, besteht durch ein Abbild der Straße, insbesondere ihrer Oberfläche, selbst. Dieses Abbild lässt sich dann abschnittsweise mit den erfassten Umgebungsdaten vergleichen, wobei jeder Abschnitt wenigstens einen Pixel umfasst, sodass also beispielsweise ein pixelweiser Vergleich der erfassten Umgebungsdaten und des in sie eingeblendeten positionsgenauen charakteristischen Abbilds erfolgen kann. Bei einem solchen charakteristischen Abbild durch eine pixelgenaue Abbildung zumindest der Oberfläche der Straße kann gemäß einer sehr vorteilhaften Weiterbildung eine Erkennung dynamischer Objekte, also beispielsweise die Erkennung von Fahrzeugen oder Fußgängern, welche in herkömmlicher Art und Weise als solche kategorisiert werden können, durchgeführt werden. Solche beweglichen Objekte werden dann in den erfassten Daten einzelnen Bereichen zugeordnet, wobei diese Bereiche von der Überprüfung ausgenommen werden, da sie aufgrund der sich bewegenden Objekte keine für die Verwendung ausreichend relevante Aussage der Überprüfung ermöglichen.

Besonders günstig ist es dabei, wenn gemäß einer sehr vorteilhaften Ausgestaltung des erfindungsgemäßen Verfahrens eine Berechnung von Gradienten der charakteristischen Abbildung erfolgt, wobei für mehrere Bereiche, wie insbesondere Fenster, der charakteristischen Abbildung ein Histogramm von orientierten Gradienten berechnet wird, wonach für jeden der Bereiche die Ähnlichkeit des Histogramms der orientierten Gradienten zu einem initialen Vektor der Straße aus der Datenbasis berechnet wird. Ein solcher initialer Vektor kann beispielsweise ein Vektor am Ankerpunkt sein, wenn für die charakteristische Abbildung Ankerpunkte eingesetzt werden. Ansonsten könnte er prinzipiell auch über ein weiteres Histogramm der orientierten Gradienten auf Basis der Daten in der Datenbasis zu der jeweiligen Straße entsprechend berechnet werden.

Der Vergleich kann dabei gemäß einer sehr günstigen Ausgestaltung als Vergleich der stärksten Vektoren dieses Histogramms der orientierten Gradienten durchgeführt werden.

Das gesamte Verfahren lässt sich nun typischerweise in dem Fahrzeug durchführen, um so einfach und effizient vor der Aufzeichnung der Daten entscheiden zu können, ob diese aufgezeichnet werden müssen oder nicht. Dies hilft Speicherplatz einzusparen und später keine unnötigen aufgezeichneten Daten übertragen zu müssen. Dabei ist es so, dass zur Verminderung des Aufwands bei der der Datenübertagung gemäß einer sehr günstigen Ausgestaltung des erfindungsgemäßen Verfahrens ferner ein Download des jeweiligen relevanten Datenpakets aus der Datenbasis erfolgen kann, also desjenigen Abschnitts der öffentlichen Straße, von dem eine charakteristische Abbildung erstellt werden soll. Wird dann beispielsweise in eine Privatstraße, Spielstraße oder dergleichen eingebogen, dann kann einfach und effizient auf diesen bereits heruntergeladenen Bereich zurückgegriffen werden, um hieraus je nach Position des Fahrzeugs die benötigte charakteristische Abbildung zur positionsgenauen Einblendung in die erfassten Umgebungsdaten, wie beispielsweise Lidardaten, Kamerabilder oder dergleichen, vorzunehmen.

Weitere vorteilhafte Ausgestaltungen des erfindungsgemäßen Verfahrens ergeben sich auch aus dem Ausführungsbeispiel, welches nachfolgend unter Bezugnahme auf die Figuren im Detail erläutert wird.

Dabei zeigen:
- Fig. 1: eine schematische Ansicht eines Fahrzeugs und eines fahrzeugexternen Servers in Form einer Cloud;
- Fig. 2: die Verfahrensschritte einer beispielhaften Möglichkeit zur Realisierung des erfindungsgemäßen Verfahrens; und
- Fig. 3: eine Draufsicht auf Straßen und verschiedene Positionen eines Fahrzeugs zur Visualisierung relevanter Verfahrensschritte aus der Darstellung in Fig. 2.

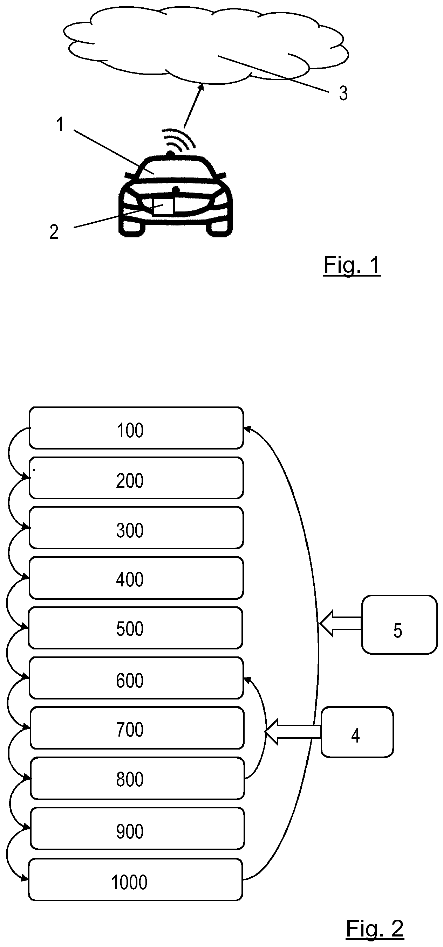

Wie eingangs bereits erwähnt ist es so, dass im Rahmen einer klassischen Datensammlung zur Erzeugung von Trainingsdaten auf einem privaten Gelände erfasst Daten nicht ohne weiteres verwertet werden dürfen. Werden diese dennoch erfasst, beispielsweise von einem in der Darstellung der Figur 1 angedeuteten Fahrzeug 1 mit angedeuteten Umgebungssensoren 2, dann müssen diese dennoch in dem Fahrzeug 1 zwischengespeichert und von Zeit zu Zeit an einen fahrzeugexternen Server, beispielsweise einen Backendserver des Fahrzeugherstellers, übermittelt werden. Dieser ist in der Darstellung der Figur 1 als Cloud angedeutet und mit dem Bezugszeichen 3 versehen.

Diese erfassten und aufgezeichneten und später an die Cloud 3 übermittelten Daten, welche nicht verwendet werden können, benötigen entsprechende Ressourcen sowohl beim Speichern, insbesondere jedoch bei der Datenübertragung von dem Fahrzeug 1 in die Cloud 3. Deshalb sind häufigere Übertragungsvorgänge notwendig und insgesamt wird eine vergleichsweise große Datenmenge übertragen, was eine entsprechend große Speicherkapazität und/oder Bandbreite der Datenverbindung erforderlich macht.

Das Fahrzeug 1 in der schematischen Darstellung der Figur 1 soll nun über eine Logik verfügen, die eine Differenzierung zwischen privaten, also nicht-öffentlichen und öffentlichen Arealen berücksichtigt und dementsprechend die Sammlung der Daten adaptiv steuert. Hierdurch kann also das Aufzeichnen und/oder Übertragen nicht verwendbarer Daten verhindert werden, um die Datenmenge sowohl beim Zwischenspeichern als auch bei der Übertragung in die Cloud 3 zu reduzieren.

Als Umgebungssensoren 2 zur Erfassung der Daten kann beispielsweise eine Kamerasystem des Fahrzeugs herangezogen werden, welche aus verschiedenen Kameras besteht, beispielsweise aus einer Frontkamera, aus Parkkameras und dergleichen. Auch andere Typen der Umgebungssensoren 2, wie beispielsweise Lidarsensoren oder ähnliches, sind alternativ oder insbesondere ergänzend zu einem Kamerasystem denkbar.

Grundlegend für die Umsetzung des Verfahrens ist es also, über diese Umgebungssensoren 2 Umgebungsdaten zu erfassen und bereitzustellen. In dem in Figur 2 dargestellten Ablaufdiagramm für ein Beispiel eines solchen Verfahrens ist diese Bereitstellung von Sensordaten durch den ersten mit 100 bezeichneten Verfahrensschritt angedeutet. Der Ablauf sieht es dann in einem zweiten Verfahrensschritt 200 vor, dass zunächst auf der Basis von SD- oder HD-Kartenmaterial einzelne Straßen entsprechend als öffentliche Straßentypen oder als nicht-öffentliche Straßentypen klassifiziert werden.

Eine einfache Klassifizierung, welche in dem Fahrzeug 1 direkt vorgenommen werden kann, wäre es beispielsweise Autobahnen und Landstraßen als öffentlich zu klassifizieren, Spielstraßen, Einfahrten und ähnliches nicht. Die Klassifikation kann grundlegend bereits durch den Provider des Kartenmaterials zur Verfügung gestellt werden, was bei dem heutigen Kartenmaterial typischerweise der Fall ist. Prinzipiell ist es jedoch auch möglich, dass das Fahrzeug 1 zusätzlich weitere Informationen, beispielsweise bei seinem Backendserver, also der Cloud 3, abfragt, um diese Kategorisierung selbsttätig vornehmen und/oder präzisieren zu können.

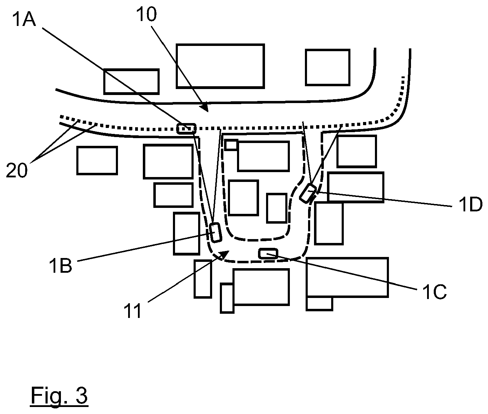

In der zur Erläuterung einiger Verfahrensschritte gewählten grafischen Darstellung der Figur 3 ist nun rein beispielhaft eine solche öffentliche Straße dargestellt und mit dem Bezugszeichen 10 versehen. Sie verläuft zwischen einzelnen hier nicht mit Bezugszeichen versehenen als Rechtecke in einer Draufsicht angedeuteten Gebäuden hindurch und ist zur Kennzeichnung ihrer Charakterisierung als öffentliche Straße 10 mit durchgezogener Linie dargestellt. Daneben ist in der Darstellung der Figur 3 eine nicht-öffentliche Straße, beispielsweise eine Spielstraße, angedeutet. Sie verläuft zwischen den Häusern in einem im Wesentlichen U-förmigen Verlauf ausgehend von der öffentlichen Straße 10 und später wieder in diese einmündend. Diese nicht-öffentliche Straße ist mit dem Bezugszeichen 11 gekennzeichnet.

Im nächsten Schritt 300 des Verfahrens geht es nun darum, ein charakteristisches Abbild der öffentlichen Straßen 10 aus dem Kartenmaterial zu bilden, und zwar insbesondere in denjenigen Bereichen, in dem die nicht-öffentliche Straße 11 abzweigt und wieder einmündet. Rein beispielhaft soll dies hier über eine Reihe von einzelnen Ankerpunkten 20, welche entlang der öffentlichen Straße 10 positioniert werden, erfolgen. In der Darstellung der Figur 3 sind einige dieser Ankerpunkte 20 angedeutet. Zur Vereinfachung der Darstellung sind jedoch nur zwei von Ihnen mit einem Bezugszeichen versehen. Diese Ankerpunkte 20 können nun in einem zuvor definierten Abstand erzeugt werden, welcher insbesondere auch von der Kategorie der öffentlichen Straße 10 bzw. der dort typischerweise genutzten baulichen Merkmale, wie der typischen Straßenbreite oder dergleichen, abhängen können. Diese einzelnen Ankerpunkte 20 haben nun einen definierten Richtungsvektor. Dieser entspricht dem typischerweise als Gierwinkel bezeichneten Richtungswinkel in der Straßenebene, welcher auch auf einer zweidimensionalen Karte entsprechend berechnet werden kann.

Diese Daten können soweit über den Backend 3 berechnet und zur Verfügung gestellt werden, sodass in einem optionalen zwischengeschobenen Verfahrensschritt 400 des Verfahrens diese Daten für die aktuell betrachtete Umgebung, also beispielsweise den in Figur 3 dargestellten Bildausschnitt, heruntergeladen werden können. Dies reduziert die notwendige Bandbreite zur Datenübertragung bei den nachfolgenden Verfahrensschritten und erlaubt es auch diese in dem Fahrzeug 1 autark durchzuführen, also auch wenn beispielsweise keine oder nur eine sehr eingeschränkte Datenverbindung zu der Cloud 3 besteht.

Im fünften Verfahrensschritt 500 ist es nun so, dass basierend auf der Eigenbewegung des Fahrzeugs 1, welche beispielsweise durch GPS und entsprechende Bewegungssensoren des Fahrzeugs 1 extrahiert werden kann, eine Projektion dieser Ankerpunkte 20 in das Koordinatensystem des Fahrzeugs 1 erfolgt. Die einzelnen Ankerpunkte 20 können also auf Basis extrinsischer und intrinsischer Kalibrierinformationen in die erfassten Umgebungsdaten, also beispielsweise die Kamerabildebene des Fahrzeugs 1, projiziert werden.

Um jeden der projizierten Ankerpunkte 20 herum können dann im nachfolgenden Verfahrensschritt 600 in einem festgelegten Fenster die jeweiligen Gradienten extrahiert werden. Die festgelegten Fenster können dabei eine Fensterbreite aufweisen, welche beispielsweise die Hälfte der Distanz zwischen den Ankerpunkten 20 beträgt, welche beispielsweise in einer Größenordnung von wenigen 10 Zentimeter bis hin zu einigen Metern für das hier dargestellte Ausführungsbeispiel liegen soll. Im nachfolgenden Schritt 700 wird dann in an sich bekannter Art und Weise ein Histogramm von orientierten Gradienten erzeugt. Dieses Histogramm der orientierten Gradienten, welches auch als HOG bezeichnet wird, wird dabei für jeden der zuvor projizierten Ankerpunkte 20 in einer vorgegebenen Region, also beispielsweise in einem festgelegten Fenster, um diesen Ankerpunkt 20 herum in den erfassten Umgebungsdaten, also beispielsweise den Kamerabildern, errechnet. Aus diesem Histogramm der orientierten Gradienten lässt sich dann erfassen, in welcher Richtung der stärkste Gradient vorliegt. Es bietet sich hierbei an, über das Histogramm der orientierten Gradienten eine Gauß-Verteilung zu legen, um eine Standardabweichung oder die Halbwertbreite abzuleiten.

Im Verfahrensschritt 800 wird nun die Ähnlichkeit dieses Histogramms der orientierten Gradienten, und hier geht es im Wesentlichen um den stärksten Vektor, welcher auch als HOGs-Vektor bezeichnet wird, zum initialen Richtungsvektor aus den Kartendaten, gemäß der oben beschriebenen Ausführung verglichen. Hierbei ist es besonders sinnvoll die Standardabweichung zu berücksichtigen, da über die Umgebungssensoren 2 des Fahrzeugs 1 auch weitere Verkehrsteilnehmer oder dynamische Objekte aufgenommen werden können, welche in der Karte nicht berücksichtigt sind. Dies führt wiederum zu vermehrten Gradienten in einzelnen Fenstern, wodurch die Standardabweichung erwartungsgemäß steigen sollte und die Aussagefähigkeit des Werts in diesem Fenster gesenkt wird. Ein solches aufgrund der dynamischen Objekte weniger aussagekräftiges Fenster wird somit auch weniger stark berücksichtig.

Jede einzelne Berechnung wird dabei für sämtliche Fenster bzw. sämtliche projizierten Ankerpunkte 20 in den Umgebungsdaten, welche das Fahrzeug 1 bzw. seine Umgebungssensoren 2 erfasst hat, entsprechend durchgeführt. Diese Durchführung der Berechnung des HOG ist dabei im Diagramm der Figur 2 durch die Wiederholung der Schritte 600, 700 und 800 entsprechend der mit 4 bezeichneten Box angedeutet.

Die Ähnlichkeit der einzelnen Vektoren wird im Folgenden Verfahrensschritt 900 dementsprechend akkumuliert und um die Menge der betrachteten Ankerpunkte 20 normiert, sodass anhand von zuvor empirisch festgelegten Schwellenwerten eine binäre Klassifikation durchgeführt werden kann. Liegt die Ähnlichkeit über dem Schwellenwert liefert der Verfahrensschritt 800 beispielsweise einen Wert "1" zurück, ansonsten den Wert "0". In diesem Verfahrensschritt werden also alle zuvor durchgeführten Berechnungen für sämtliche einzelnen Fenster und für sämtliche Kamerasysteme zusammengefasst.

Der erzeugte Wert wird nun als Auslösekriterium in den Verfahrensschritt 1000 weitergegeben. Er dient dort als ein Auslösekriterium für das Aufzeichnen der erfassten Daten. Diese Aufzeichnung wird somit immer dann ausgelöst, wenn einer der Ankerpunkte 20 durch einen beliebigen Sensor (z.B. eine Kamera) der Umgebungssensoren 2 des Fahrzeugs 1 noch zu erkennen ist. Solange ein Teil der öffentlichen Straße 10 also von dem Fahrzeug 1 aus einsehbar ist, kann, wie es nachfolgend noch anhand der Figur 3 im Detail erläutert werden wird, die Aufzeichnung der Daten, welche dann später an die Cloud 3 übermittelt werden, erfolgen.

Dieser Verfahrensablauf wird dann, wie es über die Box 5 angedeutet ist, insgesamt immer wieder wiederholt, um auch über die Zeit sicherzustellen, dass nur diejenigen Daten aufgezeichnet werden, welche auch tatsächlich genutzt werden können, um so Speicherressourcen und insbesondere Ressourcen zur Übermittlung der Daten an die Cloud 3 zu minimieren und durch das Verfahren bereits im Fahrzeug 1 über eine Logik die Entscheidung, ob diese Daten erfasst und später eingesetzt werden können oder nicht, automatisiert zu treffen.

Wie bereits erwähnt visualisiert die Figur 3 in einer Vogelperspektive ein Scenario zur Erläuterung des Verfahrens, wobei hier verschiedene Positionen des Fahrzeugs 1 dargestellt sind. Diese einzelnen Positionen des Fahrzeugs 1 sollen nachfolgend diskutiert werden und sind entsprechend mit den Buchstaben A bis D bezeichnet. Die erste zu besprechende Position des Fahrzeugs 1 ist dabei mit A bezeichnet, sodass hier das Fahrzeug 1 mit dem Bezugszeichen 1A versehen ist. Das Fahrzeug 1 befindet sich in dieser Position A auf der öffentlichen Straße 10, beispielsweise in einer Fahrbewegung von links nach rechts, und will in die nicht-öffentliche Straße 11 abbiegen. Auf der öffentlichen Straße 10 sind dabei die Ankerunkte 20 in der oben beschriebenen Art und Weise schematisch angedeutet. Solange sich das Fahrzeug 1 auf der öffentlichen Straße 10 bewegt, werden die erfassten Daten in jedem Fall aufgezeichnet und später entsprechend übermittelt. Sobald das Fahrzeug 1 nun in die nicht-öffentliche Straße 11 einbiegt gilt es für die Logik zu entscheiden, ob die erfassten Daten weiterhin aufgezeichnet werden sollen oder nicht.

Ein erstes Bespiel ist hier die mit B bezeichnete Position des Fahrzeugs 1. In dieser Position werden nun also in den erfassten Daten, hier beispielsweise in den Bildern von Rückfahrkameras, positionsgenau die einzelnen Ankerpunkte 20 im Kreuzungsbereich zwischen den beiden Straßen 10, 11 eingeblendet. Beispielsweise über die oben beschriebene Ähnlichkeitsmessung über das Histogramm der orientierten Gradienten kann nun festgestellt werden, dass in der Position B des Fahrzeugs 1 zumindest einige der Ankerpunkte 20 auf der öffentlichen Straße 10 weiterhin in den erfassten Umgebungsdaten erkennbar sind. Der Bereich um die Position B kann also von der öffentlichen Straße 10 aus eingesehen werden, womit das Sammeln der Daten in diesem Bereich sinnvoll und zulässig ist. Es erfolgt hier also eine Aufzeichnung der erfassten Umgebungsdaten.

In der Position C des Fahrzeugs 1 ist die Situation nun eine andere. Aus dieser Position heraus lässt sich über die Ähnlichkeitsmessung keiner der Ankerpunkte 20 bzw. keiner seiner Gradienten in eine ausreichend ähnliche Übereinstimmung mit den Gradienten in den erfassten Umgebungsdaten bringen. Die öffentliche Straße 10 und die sie charakteristisch abbildenden Ankerpunkte 20 sind von dem Fahrzeug 1 in der Position C aus also nicht erkennbar. Die Aufzeichnung der erfassten Daten wird entsprechend gestoppt, um Speicherkapazität und bei der späteren Übermittlung an die Cloud 3 Übertragungskapazität durch eine Reduzierung der Datenmenge einzusparen.

Erreicht das Fahrzeug 1 nun die Position D in der Darstellung der Figur 3, dann sind in den erfassten Umgebungsdaten, hier beispielsweise in den Kamerabildern der vorderen Parkkameras oder auch einer nach vorn gerichteten Hauptkamera des Fahrzeugs, wieder einzelne Ankerpunkte 20 auf der öffentlichen Straße 10 zu erkennen. Die Ähnlichkeitsmessung liefert also ein positives Ergebnis, sodass vom Verfahrensschritt 900 ein Wert "1" an den Verfahrensschritt 1000 weitergegeben wird, und somit wieder eine Aufzeichnung der erfassten Daten gestartet wird.

Selbstverständlich wird in der Praxis eine kontinuierliche oder zumindest sehr viel feiner unterteilte Überprüfung innerhalb der nicht-öffentlichen Straße 11 erfolgen, die hier dargestellten drei Positionen B, C, D des Fahrzeugs 1 dienen nur zur Erläuterung.

Dabei ist es so, dass die oben beschriebene Ähnlichkeitsmessung über die Histogramme der orientierten Gradienten als rein beispielhaft zu verstehen ist. Als charakteristische Abbildung der öffentlichen Straße 10, insbesondere in den jeweiligen Kreuzungsbereichen, könnten auch andere charakteristische Abbildungen zum Einsatz kommen. So könnte beispielsweise ein Spline, also ein Polygonzug, entlang der öffentlichen Straße 10 genutzt werden und im erfassten Bild, in welches er positionsgenau eingeblendet wird, im Rahmen einer Suchmaske entsprechend gesucht werden. Weiterhin wäre es denkbar, eine semantische Segmentierung der Kameras zu nutzen und die pixelgenauen semantischen Informationen mit den projizierten Informationen aus dem Kartenmaterial entsprechend abzugleichen. Hier würde das charakteristische Abbild also ein Abbild der gesamten Straße, insbesondere in ihrer Oberfläche sein, welches in einzelnen Bereichen, insbesondere in Bereichen von Pixelgröße, unmittelbar verglichen wird, um die Sichtbarkeit der öffentlichen Straße 10 von der jeweiligen Position B, C, D des Fahrzeugs 1 auf der nicht-öffentlichen Straße 11 aus zu verifizieren.

## Patentansprüche

1. Verfahren zur Aufzeichnung von erfassten Umgebungsdaten, welche von einem Fahrzeug (1) mit Umgebungssensoren (2) erfasst und nach der Aufzeichnung zu einem fahrzeugexternen Server (3) übertragen werden, wobei eine öffentliche und eine nicht-öffentliche Kategorie der von dem Fahrzeug (1) befahrenen Straße (10,11) aus einer existierenden Datenbasis berücksichtigt wird, wobei im Falle einer öffentlichen Straße (10) eine charakteristische Abbildung (20) der öffentlichen Straße anhand der Datenbasis ermittelt und positionsgenau in die erfassten Umgebungsdaten eingeblendet wird, **dadurch gekennzeichnet, dass** die Aufzeichnung der erfassten Umgebungsdaten immer nur dann erfolgt, wenn das Fahrzeug (1) sich auf einer als öffentlich kategorisierten Straße (10) befindet, oder wenn in den erfassten Umgebungsdaten wenigstens eines Umgebungssensors (2) des Fahrzeugs (1) wenigstens ein Teil der eingeblendeten charakteristischen Abbildung (20) der öffentlichen Straße (10) erkennbar ist.

2. Verfahren nach Anspruch 1,
**dadurch gekennzeichnet, dass**
die Erkennbarkeit anhand eines rechnerischen Vergleichs der erfassten Umgebungsdaten und der in diese positionsgenau eingeblendeten charakteristischen Abbildung (20) erfolgt.

3. Verfahren nach Anspruch 1 oder 2,
**dadurch gekennzeichnet, dass**
als Datenbasis eine SD- oder HD-Karte der Umgebung des Fahrzeugs (1) dient, aus welcher die Kategorie der Straße abgerufen und die charakteristische Abbildung (20) ermittelt wird.

4. Verfahren nach Anspruch 3,
**dadurch gekennzeichnet, dass**
bei einer unklaren Kategorisierung einer Straße Zusatzinformationen von dem fahrzeugexternen Server (3) zur Kategorisierung abgerufen werden, wobei bei einer nicht eindeutig als öffentliche kategorisierbaren Straße diese als nicht-öffentlich kategorisiert, und dieses Ergebnis dem weiteren Verfahren zugrunde gelegt, wird.

5. Verfahren nach einem der Ansprüche 1 bis 4,
**dadurch gekennzeichnet, dass**
die charakteristische Abbildung der öffentlichen Straße durch eine Reihe von Ankerpunkten (20) gebildet wird, welche entlang des Verlaufs der öffentlichen Straße anhand der Datenbasis gebildet werden.

6. Verfahren nach Anspruch 5,
**dadurch gekennzeichnet, dass**
um jeden der Ankerpunkte (20) ein Fenster gebildet wird, für dessen Bereich die Erkennbarkeit jeweils einzeln geprüft wird, wobei die Erkennbarkeit eines einzigen Ankerpunkts ausreicht, um die Aufzeichnung auszulösen.

7. Verfahren nach Anspruch 5 oder 6,
**dadurch gekennzeichnet, dass**
diejenigen Ankerpunkte (20), welche aus der erfassten Position des Fahrzeugs (1) heraus anhand der Datenbasis als durch Objekte verdeckte Ankerpunkte (20) erkennbar sind, beim Einblenden in die erfassten Umgebungsdaten und der rechnerischen Überprüfung der Erkennbarkeit unberücksichtigt bleiben.

8. Verfahren nach einem der Ansprüche 1 bis 7,
**dadurch gekennzeichnet, dass**
die charakteristische Abbildung der öffentlichen Straße (10) durch einen Polygonzug entlang der Straße gebildet wird.

9. Verfahren nach Anspruch 8,
**dadurch gekennzeichnet, dass**
der Polygonzug im Falle einer teilweise in der Datenbasis erkennbaren Verdeckung seines Verlaufs durch Objekte aus der Position des Fahrzeugs (1) heraus, in zwei oder mehr Teilpolygonzüge aufgeteilt wird, welche die sie verdeckenden Objekte aussparen.

10. Verfahren nach Anspruch 8 oder 9,
**dadurch gekennzeichnet, dass**
für den Polygonzug oder jeden der Teilpolygonzüge die Erkennbarkeit der charakteristischen Abbildung in den erfassten Umgebungsdaten geprüft wird, wobei bei Erkennbarkeit wenigstens eines Teilpolygonzugs die Aufzeichnung ausgelöst wird.

11. Verfahren nach einem der Ansprüche 1 bis 10;
**dadurch gekennzeichnet, dass**
die charakteristische Abbildung der öffentlichen Straße durch ein Abbild der Straße, insbesondere ihrer Oberfläche, gebildet wird, wobei das Abbild abschnittsweise mit den erfassten Umgebungsdaten verglichen wird, wobei jeder der Abschnitte wenigstens einen Pixel umfasst.

12. Verfahren nach Anspruch 11,
**dadurch gekennzeichnet, dass**
Bereiche mit wenigstens einem Abschnitt, in welchen in den erfassten Umgebungsdaten ein dynamisches Objekt erkannt worden ist, von der Überprüfung der Erkennbarkeit ausgenommen werden.

13. Verfahren nach einem der Ansprüche 1 bis 12,
**dadurch gekennzeichnet, dass**
eine Berechnung von Gradienten der erfassten Umgebungsdaten im Bereich der jeweils eingeblendeten charakteristischen Abbildung erfolgt, wonach ein Histogramm orientierter Gradienten berechnet wird, wonach für jeden der Bereiche die Ähnlichkeit des berechneten Histogramms der orientierten Gradienten zu einem initialen Richtungsvektor der charakteristischen Abbildung der öffentlichen Straße aus der Datenbasis berechnet wird.

14. Verfahren nach Anspruch 13,
**dadurch gekennzeichnet, dass**
für den Fall der Verfahren von Ankerpunkten (20) als charakteristische Abbildung der initiale Richtungsvektor dem Vektor am jeweiligen Ankerpunkt (20) entspricht.

15. Verfahren nach Anspruch 13 oder 14,
**dadurch gekennzeichnet, dass**
der initiale Richtungsvektor in der Datenbasis anhand eines Histogramms der orientierten Gradienten berechnet wird, wobei dessen stärkster Vektor als initialer Richtungsvektor genutzt wird.

16. Verfahren nach Anspruch 13 bis 15,
**dadurch gekennzeichnet, dass**
die Berechnung der Ähnlichkeit anhand eines Vergleichs der stärksten Vektoren erfolgt.

## Claims

1. Method for recording detected surroundings data which are detected by a vehicle (1) comprising surroundings sensors (2) and are transmitted to a vehicle-external server (3) after being recorded,
a public and a non-public category of the road (10, 11) traveled by the vehicle (1) from an existing database being taken into account,
in the case of a public road (10), a characteristic mapping (20) of the public road being determined using the database and being precisely positioned and superimposed in the detected surroundings data, **characterized in that** the detected surroundings data is only recorded when the vehicle (1) is on a road (10) categorized as public, or when at least part of the superimposed characteristic mapping (20) of the public road (10) is recognizable in the detected surroundings data of at least one surroundings sensor (2) of the vehicle (1).

2. Method according to claim 1,
**characterized in that**
the recognizability is based on a computational comparison of the detected surroundings data and the precisely positioned characteristic mapping (20) superimposed on it.

3. Method according to either claim 1 or claim 2,
**characterized in that**
an SD or HD map of the surroundings of the vehicle (1) serves as the database, from which the category of the road is retrieved and the characteristic mapping (20) is determined.

4. Method according to claim 3,
**characterized in that**
in the case of an unclear categorization of a road, additional information is retrieved from the vehicle-external server (3) for categorization, a road that cannot be clearly categorized as public being categorized as non-public and this result being used as the basis for the further method.

5. Method according to any of claims 1 to 4,
**characterized in that**
the characteristic mapping of the public road is formed by a series of anchor points (20) which are formed along the course of the public road using the database.

6. Method according to claim 5,
**characterized in that**
a window is formed around each of the anchor points (20), for the region of which the recognizability is checked individually, the recognizability of a single anchor point being sufficient to trigger the recording.

7. Method according to either claim 5 or claim 6,
**characterized in that**
those anchor points (20) which can be recognized as anchor points (20) obscured by objects from the detected position of the vehicle (1) using the database are not taken into account when they are superimposed on the detected surroundings data and when the recognizability is checked computationally.

8. Method according to any of claims 1 to 7,
**characterized in that**
the characteristic mapping of the public road (10) is formed by a polygonal chain along the road.

9. Method according to claim 8,
**characterized in that**
the polygonal chain is divided into two or more partial polygonal chains which omit the objects obscuring them, in the event that the course thereof is partially obscured by objects from the position of the vehicle (1) that can be recognized in the database.

10. Method according to either claim 8 or claim 9,
**characterized in that**
for the polygonal chain or each of the partial polygonal chains, the recognizability of the characteristic mapping in the detected surroundings data is checked, the recording being triggered if at least one partial polygonal chain is recognizable.

11. Method according to any of claims 1 to 10,
**characterized in that**
the characteristic mapping of the public road is formed by an image of the road, in particular the surface thereof, the image being compared in portions with the detected surroundings data, each of the portions comprising at least one pixel.

12. Method according to claim 11,
**characterized in that**
regions having at least one portion, in which a dynamic object has been recognized in the detected surroundings data, are excluded from the recognizability check.

13. Method according to any of claims 1 to 12,
**characterized in that**
gradients of the detected surroundings data are calculated in the region of the superimposed characteristic mapping in each case, after which a histogram of oriented gradients is calculated, after which the similarity of the calculated histogram of the oriented gradients to an initial direction vector of the characteristic mapping of the public road from the database is calculated for each of the regions.

14. Method according to claim 13,
**characterized in that**
in the case of the method of anchor points (20) as a characteristic mapping, the initial direction vector corresponds to the vector at the relevant anchor point (20).

15. Method according to ether claim 13 or claim 14,
**characterized in that**
the initial direction vector in the database is calculated using a histogram of the oriented gradients, its strongest vector being used as the initial direction vector.

16. Method according to claims 13 to 15,
**characterized in that**
the similarity is calculated using a comparison of the strongest vectors.

## Revendications

1. Procédé d'enregistrement de données d'environnement détectées, qui sont détectées par un véhicule (1) avec des capteurs d'environnement (2) et qui sont transmises après l'enregistrement à un serveur (3) externe au véhicule,
dans lequel
une catégorie publique et une catégorie non publique de la route (10, 11) empruntée par le véhicule (1) est prise en compte à partir d'une base de données existante, dans lequel dans le cas d'une route publique (10), une représentation caractéristique (20) de la route publique est déterminée à l'aide de la base de données et insérée avec une précision de position dans les données d'environnement détectées, **caractérisé en ce que** l'enregistrement des données d'environnement détectées n'a lieu que lorsque le véhicule (1) se trouve sur une route (10) catégorisée comme publique, ou lorsque dans les données d'environnement détectées d'au moins un capteur d'environnement (2) du véhicule (1), au moins une partie de la représentation caractéristique (20) insérée de la route publique (10) est reconnaissable.

2. Procédé selon la revendication 1,
**caractérisé en ce que**
la reconnaissance s'effectue à l'aide d'une comparaison par calcul des données d'environnement détectées et de la représentation caractéristique (20) insérée dans celles-ci avec une précision de position.

3. Procédé selon la revendication 1 ou 2,
**caractérisé en ce que**
une carte SD ou HD de l'environnement du véhicule (1) sert de base de données, à partir de laquelle la catégorie de la route est appelée et la représentation caractéristique (20) est déterminée.

4. Procédé selon la revendication 3,
**caractérisé en ce que**
dans le cas d'une catégorisation peu claire d'une route, des informations supplémentaires sont appelées par le serveur (3) externe au véhicule pour la catégorisation, dans lequel dans le cas d'une route ne pouvant pas être catégorisée clairement comme publique, celle-ci est catégorisée comme non publique, et ce résultat est pris comme base pour la suite du procédé.

5. Procédé selon l'une des revendications 1 à 4,
**caractérisé en ce que**
la représentation caractéristique de la route publique est formée par une série de points d'ancrage (20) qui sont formés le long du tracé de la route publique à l'aide de la base de données.

6. Procédé selon la revendication 5,
**caractérisé en ce que**
une fenêtre est formée autour de chacun des points d'ancrage (20), pour la zone de laquelle la reconnaissabilité est respectivement contrôlée individuellement, dans lequel la reconnaissabilité d'un seul point d'ancrage est suffisante pour déclencher l'enregistrement.

7. Procédé selon la revendication 5 ou 6,
**caractérisé en ce que**
les points d'ancrage (20) qui, à partir de la position détectée du véhicule (1), sont reconnaissables à l'aide de la base de données en tant que points d'ancrage (20) cachés par des objets, ne sont pas pris en compte lors de l'insertion dans les données d'environnement détectées et du contrôle par calcul de la reconnaissabilité.

8. Procédé selon l'une des revendications 1 à 7,
**caractérisé en ce que**
la représentation caractéristique de la route publique (10) est formée par un tracé polygonal le long de la route.

9. Procédé selon la revendication 8,
**caractérisé en ce que**
le tracé polygonal est divisé en deux tracés polygonaux partiels ou plus qui évitent les objets qui les cachent, dans le cas d'une occultation partielle de son tracé par des objets détectable dans la base de données à partir de la position du véhicule (1).

10. Procédé selon la revendication 8 ou 9,
**caractérisé en ce que**
pour le tracé polygonal ou chacun des tracés polygonaux partiels, la reconnaissabilité de la représentation caractéristique dans les données d'environnement détectées est contrôlée, dans lequel l'enregistrement est déclenché en cas de reconnaissabilité d'au moins un tracé polygonal partiel.

11. Procédé selon l'une des revendications 1 à 10 ;
**caractérisé en ce que**
la représentation caractéristique de la route publique est formée par une image de la route, en particulier de sa surface, dans lequel l'image est comparée section par section aux données d'environnement détectées, dans lequel chacune des sections comprend au moins un pixel.

12. Procédé selon la revendication 11,
**caractérisé en ce que**
des zones comportant au moins une section dans laquelle un objet dynamique a été reconnu dans les données d'environnement détectées sont exclues du contrôle de la reconnaissabilité.

13. Procédé selon l'une des revendications 1 à 12,
**caractérisé en ce que**
un calcul de gradients des données d'environnement détectées est effectué dans la zone de la représentation caractéristique respectivement insérée, après quoi un histogramme de gradients orientés est calculé, après quoi, pour chacune des zones, la similitude de l'histogramme calculé des gradients orientés avec un vecteur directionnel initial de la représentation caractéristique de la route publique est calculée à partir de la base de données.

14. Procédé selon la revendication 13,
**caractérisé en ce que**
dans le cas du procédé de points d'ancrage (20) en tant que représentation caractéristique, le vecteur directionnel initial correspond au vecteur au point d'ancrage (20) respectif.

15. Procédé selon la revendication 13 ou 14,
**caractérisé en ce que**
le vecteur directionnel initial dans la base de données est calculé à partir d'un histogramme des gradients orientés, dont le vecteur le plus fort est utilisé comme vecteur directionnel initial.

16. Procédé selon la revendication 13 à 15,
**caractérisé en ce que**
le calcul de la similitude s'effectue à l'aide d'une comparaison des vecteurs les plus forts.
